# EUROPÄISCHE PATENTANMELDUNG

(11) **EP 2 031 353 A2**
(43) Veröffentlichungstag der Anmeldung: **04.03.2009**
(21) Anmeldenummer: 08012830.9
(22) Anmeldetag: 16.07.2008
(51) Int. Cl.: G01C 21/36

(54) **Verfahren zum Betrieb eines Navigationssystems**

(30) Priorität: 27.08.2007 DE 102007040633
(71) Anmelder: Navigon AG, 20251 Hamburg (DE)
(72) Erfinder: Schmidt, Thorsten W., 97318 Kitzingen (DE)
(74) Vertreter: von den Steinen, Axel

(57) **Zusammenfassung**

Die Erfindung betrifft ein Verfahren zum Betrieb eines Navigationssystems, umfassend zumindest ein erstes Benutzerendgerät (01, 03, 06) und zumindest ein Navigationsgerät (02, 04, 07),
- wobei das Benutzerendgerät (01, 03, 06) eine Eingabeeinrichtung umfasst, mit der Bedienerbefehle und/oder Ortsangaben, insbesondere Zielpunkte, und/oder Zeitangaben, insbesondere Zielzeiten, eingegeben werden können,
- und wobei das Benutzerendgerät (01, 03, 06) eine Sendeeinheit umfasst, mit der benutzergenerierte Nachrichten über ein Kommunikationssystem verschickt werden können,
- und wobei das Navigationsgerät (02, 04, 07) eine Empfangseinheit umfasst, mit der Nachrichten aus dem Kommunikationssystem empfangen werden können,
- und wobei das Navigationsgerät (02, 04, 07) eine Wegenetzdatenbank umfasst,
- und wobei das Navigationsgerät (02, 04, 07) eine Routenberechnungseinheit zur Berechnung einer geplanten Route umfasst,
mit folgenden Verfahrensschritten:
a) Eingabe eines Zielpunktes und einer Zielzeit am Benutzerendgerät (01, 03, 06);
b) Datenfernübertragung einer Nachricht vom Benutzerendgerät (01, 03, 06) an das Navigationsgerät (02, 04, 07), wobei die Nachricht einen Zielpunkt und eine Zielzeit beinhaltet;
c) Empfang der Nachricht am Navigationsgerät;
d) Berechnung einer Route am Navigationsgerät (02, 04, 07), wobei die Route vom aktuellen Startpunkt zum mit der Nachricht empfangenen Zielpunkt führt;
e) Ausgabe der Route.

## Beschreibung

Die Erfindung betrifft ein Verfahren zum Betrieb eines Navigationssystems.

Das erfindungsgemäße Navigationssystem umfasst zumindest ein Benutzerendgerät, beispielsweise ein Mobiltelefon, einen Personalcomputer, einen Pager oder ein mobiles Navigationsgerät (Personal Navigation Assistent/ PNA). Weiter umfasst das Navigationssystem zumindest ein Navigationsgerät, beispielsweise ein mobiles Navigationsgerät (PNA) oder einen Personalcomputer mit einer darauf installierten Navigationssoftware oder ein Mobiltelefon mit Navigationsapplikation.

Wollen sich zwei oder mehrere Personen miteinander treffen, so muss üblicherweise eine Zielzeit und ein im Zielort beschriebener Zielpunkt vereinbart werden. Dazu können die beteiligten Personen beispielsweise per E-Mail oder Telefon Kontakt aufnehmen und den gemeinsam zu vereinbarenden Zielpunkt bzw. die zu vereinbarende Zielzeit für den Treffpunkt austauschen. Um den Zielort anschließend auffinden zu können, werden die entsprechenden Beschreibungsdaten, beispielsweise die Zieladresse, von den verschiedenen Personen an einem Navigationsgerät eingegeben, und eine Route zum Zielpunkt wird berechnet.

Diese Art der Vereinbarung von Treffen zwischen mehreren Personen ist umständlich und fehleranfällig. Mehrfach müssen Daten, nämlich die Daten zur Beschreibung des Zielpunkts bzw. der Zielzeit, von den Benutzern abgelesen und am Navigationsgerät eingegeben werden. Beim Ablesen bzw. Eingehen der Daten kann es dabei sehr leicht zu Fehlern kommen, wodurch das Treffen gestört wird.

Ausgehend von diesem Stand der Technik ist es deshalb Aufgabe der vorliegenden Erfindung, ein neues Verfahren zum Betrieb eines Navigationssystems vorzuschlagen, das die Vereinbarung von Treffen zwischen mehreren Personen vereinfacht und Fehlerquellen ausschließt.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf dem Grundgedanken, dass das Benutzerendgerät und das Navigationsgerät in dem Navigationssystem über ein Kommunikationssystem Daten austauschen können. Der erfindungsgemäße Datenfluss läuft dabei vom Benutzerendgerät zum Navigationsgerät. Um benutzergenerierte Nachrichten über das Kommunikationssystem an das Navigationsgerät weiterleiten zu können, ist das Benutzersendegerät mit einer geeigneten Sendeeinheit ausgestattet. Dabei kann es sich beispielsweise um eine SMS-Sendeeinheit oder um eine E-Mail-Software handeln. Außerdem ist das Benutzerendgerät mit einer Eingabeeinrichtung ausgestattet, mit der Bedienerbefehle, Ortsangaben und Zeitangaben eingegeben werden können.

Das Navigationsgerät seinerseits ist mit einer Empfangseinheit ausgestattet, mit der die vom Benutzerendgerät über das Kommunikationssystem versandten Nachrichten empfangen werden können. Darüber hinaus ist das Navigationsgerät mit einer Wegenetzdatenbank zur Beschreibung eines geografischen Gebiets in maschinenlesbarer Form und mit einer Routenberechnungseinheit zur Berechnung von geplanten Bewegungsrouten ausgestattet.

Kern des erfindungsgemäßen Verfahrens ist es, dass die essentiellen Daten zur Vereinbarung eines Treffens zwischen zumindest zwei Personen, nämlich der Zielpunkt und die Zielzeit, ohne Kommunikationsbrüche übertragen werden. Um dies zu gewährleisten, werden zunächst der Zielpunkt und die Zielzeit am Benutzerendgerät eingegeben. Anschließend wird am Benutzerendgerät eine Nachricht generiert, die die Zielzeit und den Zielpunkt beinhaltet. Diese Nachricht wird per Datenfernübertragung, beispielsweise als E-Mail oder per SMS, an das Navigationsgerät übertragen. Nach Empfang der Nachricht am Navigationsgerät ist das Navigationsgerät eindeutig über den Zielpunkt und die Zielzeit informiert, wobei Eingabefehler ausgeschlossen sind, da der Benutzer in den Datenfluss zum Austausch des Zielpunkts und der Zielzeit nicht eingreift. Sobald das Navigationsgerät die notwendigen Informationen über das Treffen in Form des vereinbarten Zielpunkts und der vereinbarten Zielzeit erhalten hat, wird eine Bewegungsroute für den Benutzer berechnet, die den Benutzer vom aktuellen Startpunkt zum mit der Nachricht empfangenen Zielpunkt führt. Diese Route wird dem Benutzer anschließend in einer geeigneten Form ausgegeben, beispielsweise an einem Bildschirm angezeigt oder an einem Drucker ausgedruckt.

Für die Durchführung des erfindungsgemäßen Verfahrens reicht es im Grundsatz aus, dass mit den über das Kommunikationssystem erhaltenen Zieldaten (Zielpunkt, Zielzeit) eine Route berechnet und ausgegeben wird. Dazu kann beispielsweise an einem Personalcomputer unter Verwendung geeigneter Routenberechnungsalgorithmen aus einer Datenbank eine geeignete Streckenfolge selektiert und am Bildschirm angezeigt bzw. am Drucker ausgegeben werden. Besonders vorteilhaft ist es jedoch, wenn der Benutzer des Navigationsgeräts zusätzlich auch noch beim Auffinden des Zielpunktes unterstützt wird. Dazu muss das Navigationsgerät mit einer Signalempfangseinheit zum Empfang von Positionssignalen, beispielsweise Signalen von GPS-Satelliten, und einer Positionsermittlungseinheit zur Bestimmung der aktuellen Position aus den Positionssignalen ausgestattet sein. Mobile Navigationsgeräte, beispielsweise PNAs, weisen diese Funktionalität üblicherweise auf. Ausgehend von der mit den Zielpunktkoordinaten berechneten Route erhält der Benutzer dann vom Navigationsgerät abhängig von seiner jeweils aktuellen Position Manöveranweisungen, um der Route in Richtung des Zielpunktes folgen zu können.

Erfindungsgemäß werden nicht nur die Zielpunktkoordinaten, sondern auch die Zielzeit, zu der man sich am Zielpunkt treffen will, vom Benutzerendgerät an das Navigationsgerät übertragen. In welcher Weise diese Zielzeit dann im Navigationsgerät weiterverarbeitet wird, ist grundsätzlich beliebig. Nach einer ersten, besonders einfachen Ausführungsform wird dem Benutzer die Zielzeit an einer Ausgabeeinrichtung des Navigationsgeräts ausgegeben, beispielsweise angezeigt.

Gemäß einer im Hinblick auf die Zielzeit erweiterten Verfahrensvariante wird im Navigationsgerät die voraussichtliche Routenzeit für die Zurücklegung der Route vom aktuellen Standpunkt zum Zielpunkt berechnet. Damit ist dann im Navigationsgerät bekannt, mit welcher Bewegungszeit, beispielsweise einer Fahrtzeit, gerechnet werden muss, um den Zielpunkt ausgehend vom Startpunkt zu erreichen. Da zudem auch die gewünschte Zielzeit bekannt ist, kann aus der Zielzeit und der voraussichtlichen Routenzeit eine empfohlene Abfahrtszeit abgeleitet und dem Benutzer ausgegeben werden. Damit ist es insbesondere denkbar, dass das Navigationsgerät den Benutzer an die notwendige Abfahrt erinnert, damit er die vereinbarte Zielzeit am Zielpunkt unter Berücksichtigung der voraussichtlichen Routenzeit einhalten kann. Darüber hinaus können dem Benutzer auch Vorwarnsignale im Vorfeld der empfohlenen Abfahrtszeit ausgegeben werden, um ihn rechtzeitig an die Abfahrt zu erinnern.

Wurde vom Navigationsgerät eine empfohlene Abfahrtszeit berechnet, kann diese empfohlene Abfahrtszeit auch mit der aktuellen Uhrzeit verglichen und eine Plausibilitätskontrolle durchgeführt werden. Damit kann in der Plausibilitätskontrolle festgestellt werden, ob die gewünschte Zielzeit theoretisch überhaupt noch einzuhalten ist. Ergibt sich, dass aufgrund der voraussichtlichen Routenzeit die Einhaltung der gewünschten Zielzeit nicht mehr möglich ist, wird dieses negative Ergebnis der Plausibilitätskontrolle dazu genutzt, dem Benutzer ein Warnsignal auszugeben und ihn dadurch darauf hinzuweisen, dass die Einhaltung der Zielzeit aufgrund der voraussichtlichen Routenzeit nicht mehr möglich ist.

In welcher Weise die den Zielpunkt und die Zielzeit enthaltende Nachricht vom Benutzerendgerät an das Navigationsgerät übertragen wird, ist grundsätzlich beliebig. Besonders einfach und sicher kann dies erfolgen, wenn die Nachricht in der Art einer Mobilfunk-Textnachricht (SMS, MMS, WAP) oder in der Art einer Internet-Textnachricht (E-Mail, TCP-IP) codiert ist.

Erfindungsgemäß muss der Benutzer des Benutzerendgeräts die Zielpunktkoordinaten am Benutzerendgerät eingeben. Dies kann beispielsweise durch Bedienung einer alphanumerischen Tastatur oder durch Auswahl von in einer Datenbank gespeicherten Zielpunkten erfolgen. Vielfach ist dem Benutzer jedoch die genaue Beschreibung des Zielpunktes gar nicht bekannt. Vielmehr möchte er ein Treffen an seiner aktuellen Position vereinbaren. Weist das Benutzerendgerät eine Signalempfangseinheit zum Empfang von Positionssignalen, beispielsweise Positionssignalen von GPS-Satelliten, und eine Positionsermittlungseinheit zur Bestimmung der aktuellen Position aus den Positionssignalen auf, so kann auf entsprechende Anforderung des Benutzers die aktuelle Position bestimmt und die Ortskoordinaten der aktuellen Position können als Eingabe zur Generierung der an das Navigationsgerät zu übertragenden Nachricht übernommen werden. Im Ergebnis wird also dadurch erreicht, das auf entsprechende Benutzeranforderung die aktuelle Position des Benutzerendgeräts an das Navigationsgerät übertragen wird. Im Navigationsgerät kann dann eine Bewegungsroute berechnet werden, die den Benutzer des Navigationsgeräts zum Standort des Benutzergeräts führt.

Ändert sich die Position des Benutzerendgeräts, beispielsweise weil der Benutzer des Benutzerendgeräts sich von einem Punkt zu einem anderen Punkt bewegt, muss sich auch entsprechend die vom Navigationsgerät berechnete und dem Benutzer des Navigationsgeräts ausgegebene Bewegungsroute verändern. Um dies zu ermöglichen, kann nach einer bevorzugten Verfahrensvariante die aktuelle Position des Benutzerendgeräts jeweils dynamisch aktualisiert und wiederholt an das Navigationsgerät übertragen werden. So ist es denkbar, dass in fest vorgegebenen Zeitabständen, beispielsweise im Abstand von jeweils fünf Minuten, die aktuelle Position des Benutzerendgeräts neu bestimmt und das Ergebnis der Positionsbestimmung als Nachricht an das Navigationsgerät übertragen wird. Auf diese Weise können im Navigationsgerät die Ortsveränderungen des Benutzerendgeräts berücksichtigt und in die Routenplanung einbezogen werden.

In der Grundform des erfindungsgemäßen Verfahrens wird die die Zieldaten enthaltende Nachricht direkt vom Benutzerendgerät an das Navigationsgerät übertragen. Dies kann beispielsweise dadurch erfolgen, dass eine SMS-Nachricht mit den Zielpunktkoordinatcn und der Zielzeit von einem Mobilfunktelefon an ein mobiles Navigationsgerät übertragen wird. Eine unmittelbare Datenübertragung ist jedoch nicht zwingend erforderlich. Vielmehr kann in dem Kommunikationssystem auch ein Nachrichtenserver zwischengeschaltet sein, der die Nachricht mit Zielpunkt und Zielzeit vom Benutzerendgerät empfängt und auf Anforderung an das Navigationsgerät überträgt. Damit ist insbesondere eine zeitversetzte Übertragung der Zieldaten zwischen Benutzerendgerät und Navigationsgerät möglich. Außerdem kann durch einen zwischengeschalteten Nachrichtenserver ermöglicht werden, dass die Zieldaten an eine Vielzahl von Navigationsgeräten weitergeleitet werden, ohne dass der Benutzer des Benutzerendgerätes selber eine entsprechende Anzahl von Nachrichten generieren muss.

Besonders große Vorteile bietet das erfindungsgemäße Verfahren, wenn Treffen zwischen einer Vielzahl von Personen vereinbart werden sollen. In diesem Fall wird die die Zieldaten (Zielpunkt, Zielzeit) enthaltende Nachricht nicht nur an ein Navigationsgerät übertragen, sondern an mehrere Navigationsgeräte. Die zur Übertragung der Nachricht vorgesehenen Navigationsgeräte können dabei beispielsweise einer gemeinsamen Empfängergruppe angehören. Will ein Teilnehmer dieser Gruppe andere Teilnehmer der Gruppe zu einem gemeinsamen Treffen einladen, schickt er eine entsprechende Nachricht, die dann automatisch an alle Gruppenmitglieder und deren Navigationsgeräte übertragen wird. Entsprechende Anwendungen können bevorzugt auf so genannten Community-Servern installiert sein. Bei der Generierung der Zielpunktkoordinaten kann der Community-Server den Benutzer des Benutzerendgeräts unterstützen. Beispielsweise ist es denkbar, dass der Benutzer des Benutzerendgeräts bestimmte Zielkriterien an den Community-Server überträgt und diese Zielkriterien automatisch vom Community-Server ausgewertet werden. Zielkriterien könnten dabei beispielsweise die Art des gewünschten Treffens (Essen gehen, Kino, Theater) sein, aus denen der Community-Server dann entsprechende Zielpunkte ableiten kann.

Ein besonders wichtiges Zielkriterium zur Vereinbarung eines Treffens zwischen mehreren Personen ist der jeweilige Standort der Benutzer. Denn ein Treffpunkt sollte möglichst so vereinbart werden, dass die Benutzer ihn mit möglichst kurzer Anfahrtsstrecke erreichen können. Nach einer bevorzugten Verfahrensvariante ist es deshalb vorgesehen, dass der aktuelle Standort des Benutzerendgeräts und/oder der aktuelle Standort mindestens eines Navigationsgeräts an den Community-Server übertragen werden. Aus allen eingehenden aktuellen Standorten berechnet der Community-Server dann einen geeigneten Zielpunkt, der an alle Navigationsgeräte weitergeleitet wird.

Um den Mitgliedern einer Community-Gruppe auch eine zeitversetzte Vereinbarung von Treffen zu ermöglichen, ist es besonders vorteilhaft, wenn der Zielpunkt unter einer bestimmten Adressierung im Community-Server gespeichert wird. Die Nachricht des Benutzerendgeräts an die Navigationsgeräte zur Beschreibung der Zieldaten enthält dann nicht mehr die Zieldaten selbst, sondern die Adressierung der Zieldaten im Community-Server. Mit dieser Adressierung können die Navigationsgeräte die entsprechenden Daten dann am Community-Server selbsttätig abholen.

Verschiedene Aspekte der Erfindung sind in den Zeichnungen schematisch dargestellt und werden nachfolgend beispielhaft erläutert.
- **Fig. 1**: zeigt ein erstes Navigationssystem bei Durchführung des erfindungsgemäßen Verfahrens;
- **Fig. 2**: zeigt ein zweites erfindungsgemäßes Navigationssystem bei Durchführung des erfindungsgemäßen Verfahrens;
- **Fig. 3**: zeigt ein drittes Navigationssystem bei Durchführung des erfindungsgemäßen Verfahrens;
- **Fig. 4**: zeigt ein viertes Navigationssystem bei Durchführung des erfindungsgemäßen Verfahrens.

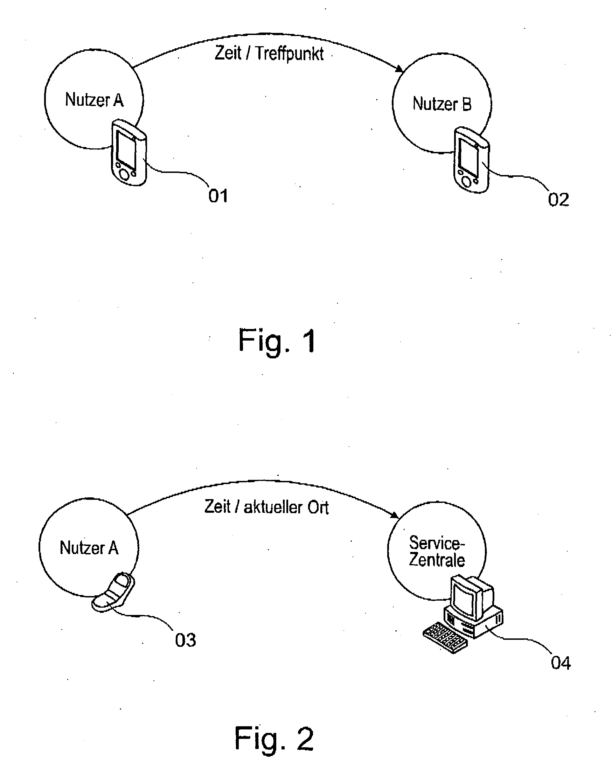

**Fig. 1** zeigt ein Navigationssystem bestehend aus einem Benutzerendgerät 01, nämlich einem mobilen Navigationsgerät, und einem Navigationsgerät 02, das ebenfalls in der Art eines mobilen Navigationsgeräts ausgebildet ist. Um ein Treffen zwischen dem Nutzer A des Benutzerendgeräts 01 und dem Nutzer B des Navigationsgeräts 02 zu vereinbaren, kann Nutzer A die gewünschten Zieldaten, nämlich den Zielpunkt und die Zielzeit, am Benutzerendgerät 01 eingeben. Per Datenfernübertragung werden diese Daten dann an das Navigationsgerät 02 übertragen und automatisch in die Routenberechnung des Navigationsgeräts 02 übernommen. Das Navigationsgerät 02 berechnet dann eine Route für den Nutzer B, die den Nutzer B von seinem aktuellen Standpunkt zum gewünschten Zielpunkt führt. Die notwendigen Manöveranweisungen zur Einhaltung der Route werden dem Nutzer B durch das Navigationsgerät 02 akustisch angesagt und an dem Display angezeigt.

**Fig. 2** zeigt ein Navigationssystem mit einem Benutzerendgerät 03, nämlich einem Mobiltelefon mit einer darauf installierten Navigationsapplikation, und einem Navigationsgerät 04, nämlich einem Personalcomputer mit darauf installierter Navigationssoftware. Bei dem Navigationsgerät 04 kann es sich beispielsweise um die Servicezentrale eines Taxiunternehmens oder die Servicezentrale eines Krankentransportdienstes handeln. Auf Anforderung des Nutzers A bestimmt das Benutzerendgerät 03 seine aktuelle Position und überträgt diese per Datenfernübertragung gemeinsam mit einer gewünschten Zielzeit an das Navigationssystem 04. Hier wird dann eine Route zum Anfahren der aktuellen Position des Nutzers A berechnet, die beispielsweise einen Krankenwagen oder ein Taxi von seiner aktuellen Position zum Standpunkt des Nutzers A führt.

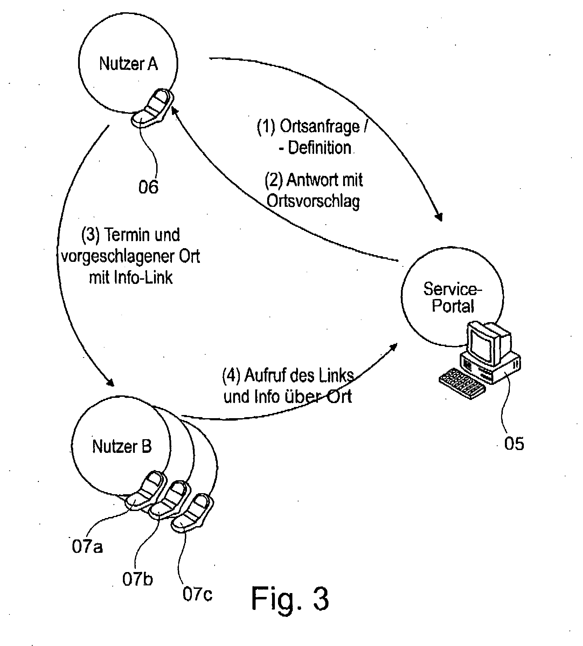

**Fig. 3** zeigt ein Navigationssystem, bei dem ein Serviceportal-Rechner 05, der als Community-Server dient, in die Kommunikation zwischen einem Benutzerendgerät 06, nämlich einem Mobiltelefon mit Navigationsapplikation, und mehreren Navigationsgeräten 07a bis 07c eingebunden ist. Zunächst stellt der Nutzer A per Datenfernübertragung von seinem Benutzerendgerät 06 aus eine Zielanfrage an den Community-Server 05. In dieser Ortsanfrage werden bestimmte Zielkriterien vorgegeben, die für ein Treffen mit mehreren Nutzern B eingehalten werden sollen. Ausgehend von diesen Zielkriterien ermittelt der Community-Server 05 einen geeigneten Zielpunkt, beispielsweise ein Lokal, einen Grillplatz oder Ähnliches. Dieser Zielvorschlag mit den Zielpunktkoordinaten wird im Community-Server 05 zwischengespeichert und zugleich per Datenfernübertragung an den Nutzer A übertragen. Neben dem eigentlichen Zielvorschlag enthält die Nachricht des Community-Servers 05 an den Nutzer A auch den Link auf die Zielpunktkoordinaten, die im Community-Server 05 gespeichert sind. Der Nutzer A überträgt dann erfindungsgemäß die Zieldaten mit gewünschter Zielzeit und dem Link auf die Zielpunktkoordinaten im Community-Server 05 an die Navigationsgeräte 07a bis 07c der Nutzer B, die zur gemeinsamen Nutzergruppe gehören. Mittels dieses Links rufen die Navigationsgeräte 07a bis 07c die Zielkoordinaten am Community-Server 05 ab und laden diese dann automatisch in die Navigationsroutine zur Berechnung der Route.

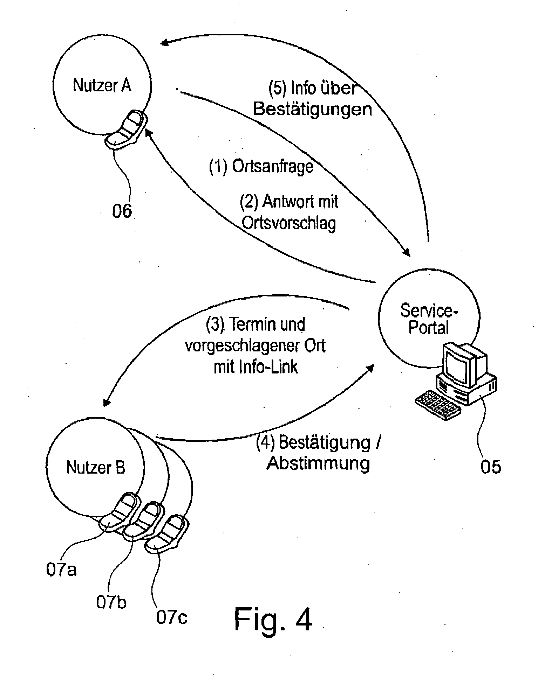

**Fig. 4** zeigt ein Navigationssystem, das eine Variante des in **Fig. 3** dargestellten Navigationssystems darstellt. Im Unterschied zum Navigationssystems gemäß Fig. 3 werden beim Navigationssystem gemäß **Fig. 4** die Zieldaten (Zielzeit, Zielpunkt) nicht direkt vom Nutzer A an die Nutzer B übertragen, sondern über den Community-Server 05 vermittelt. Das heißt, die Zielzeit und die Zielpunktkoordinaten werden vom Community-Server 05 an die Navigationsgeräte 07a bis 07c übermittelt. Sind die Nutzer B der Navigationsgeräte 07a bis 07c mit dem gewünschten Treffen einverstanden, so werden von den Navigationsgeräten 07a bis 07c Bestätigungen an den Community-Server 05 übertragen und diese Bestätigungen vom Community-Server 05 an das Benutzerendgerät 06 des Nutzers A weitergeleitet.

## Patentansprüche

1. Verfahren zum Betrieb eines Navigationssystems, umfassend zumindest ein erstes Benutzerendgerät (01, 03, 06) und zumindest ein Navigationsgerät (02, 04, 07),
- wobei das Benutzerendgerät (01, 03, 06) eine Eingabeeinrichtung umfasst, mit der Bedienerbefehle und/oder Ortsangaben, insbesondere Zielpunkte, und/oder Zeitangaben, insbesondere Zielzeiten, eingegeben werden können,
- und wobei das Benutzerendgerät (01, 03, 06) eine Sendeeinheit umfasst, mit der benutzergenerierte Nachrichten über ein Kommunikationssystem verschickt werden können,
- und wobei das Navigationsgerät (02, 04, 07) eine Empfangseinheit umfasst, mit der Nachrichten aus dem Kommunikationssystem empfangen werden können,
- und wobei das Navigationsgerät (02, 04, 07) eine Wegenetzdatenbank umfasst,
- und wobei das Navigationsgerät (02, 04, 07) eine Routenberechnungseinheit zur Berechnung einer geplanten Route umfasst,
mit folgenden Verfahrensschritten:
a) Eingabe eines Zielpunktes und einer Zielzeit am Benutzerendgerät (01, 03, 06);
b) Datenfernübertragung einer Nachricht vom Benutzerendgerät (01, 03, 06) an das Navigationsgerät (02, 04, 07), wobei die Nachricht einen Zielpunkt und eine Zielzeit beinhaltet;
c) Empfang der Nachricht am Navigationsgerät;
d) Berechnung einer Route am Navigationsgerät (02, 04, 07), wobei die Route vom aktuellen Startpunkt zum mit der Nachricht empfangenen Zielpunkt führt;
e) Ausgabe der Route.

2. Verfahren nach Anspruch 1,
**dadurch gekennzeichnet,**
**dass** das Navigationsgerät (02, 04) eine Signalempfangseinheit zum Empfang von Positionssignalen, insbesondere GPS-Signalen, umfasst, wobei das Navigationsgerät (02, 04) mittels einer Positionsermittlungseinheit die aktuelle Position aus den Positionssignalen bestimmt, und wobei das Navigationsgerät (02, 04) abhängig von der aktuellen Position Manöveranweisungen zum Folgen der Route ausgibt.

3. Verfahren nach Anspruch 1 oder 2,
**dadurch gekennzeichnet,**
**dass** die Zielzeit an der Ausgabeeinrichtung des Navigationsgeräts (02, 04, 07) ausgegeben, insbesondere angezeigt, wird.

4. Verfahren nach einem der Ansprüche 1 bis 3,
**dadurch gekennzeichnet,**
**dass** im Navigationsgerät (02, 04) die vorrausichtliche Routenzeit für die Zurücklegung der Route vom aktuellen Startpunkt zum mit der Nachricht empfangenen Zielpunkt berechnet wird, wobei aus der empfangenen Zielzeit und der voraussichtlichen Routenzeit eine empfohlene Abfahrtszeit abgeleitet und ausgegeben wird.

5. Verfahren nach Anspruch 4,
**dadurch gekennzeichnet,**
**dass** zwischen der empfohlenen Abfahrtszeit und der aktuellen Uhrzeit eine Plausibilitätskontrolle durchgeführt wird und abhängig vom Ergebnis der Plausibilitätskontrolle ein Warnsignal ausgegeben werden kann.

6. Verfahren nach einem der Ansprüche 1 bis 5,
**dadurch gekennzeichnet,**
**dass** die Nachricht mit Zielpunkt und Zielzeit zwischen Benutzerendgerät (01, 03, 06) an das Navigationsgerät (02, 04, 07) als Mobilfunk-Textnachricht (SMS, MMS, WAP) oder Internet-Textnachricht (E-Mail, TCP-IP) übertragen wird.

7. Verfahren nach einem der Ansprüche 1 bis 6,
**dadurch gekennzeichnet,**
**dass** das Benutzerendgerät (01, 03, 06) eine Signalempfangseinheit zum Empfang von Positionssignalen, insbesondere GPS-Signalen, umfasst, wobei das Benutzerendgerät mittels einer Positionsermittlungseinheit die aktuelle Position aus den Positionssignalen bestimmt, und wobei die aktuelle Position des Benutzerendgeräts (01, 03, 06) mit einer Nachricht als Zielpunkt vom Benutzerendgerät (01, 03, 06) an das Navigationsgerät (02, 04, 07) übertragen wird.

8. Verfahren nach Anspruch 7,
**dadurch gekennzeichnet,**
**dass** die aktuelle Position des Benutzerendgeräts (01, 03, 06) dynamisch aktualisiert und wiederholt an des Navigationsgerät (02, 04, 07) übertragen wird.

9. Verfahren nach einem der Ansprüche 1 bis 8,
**dadurch gekennzeichnet,**
**dass** das Kommunikationssystem einen Nachrichtenserver, insbesondere einen Community-Server (05), umfasst, wobei die Nachricht mit Zielpunkt und Zielzeit vom Benutzerendgerät (06) an den Nachrichtenserver (05) und, insbesondere zeitversetzt, vom Nachrichtenserver (05) an das Navigationsgerät (07) übertragen wird.

10. Verfahren nach einem der Ansprüche 1 bis 9,
**dadurch gekennzeichnet,**
**dass** die Nachricht mit Zielpunkt und Zielzeit vom Benutzerendgerät (06) an mehrere Navigationsgeräte (07a, 07b, 07c), insbesondere zu einer gemeinsamen Empfängergruppe gehörenden Navigationsgeräte, übertragen wird.

11. Verfahren nach einem der Ansprüche 1 bis 10,
**dadurch gekennzeichnet,**
**dass** der Zielpunkt von einem Community-Server (05) durch Auswertung von vorgegebenen Zielkriterien abgeleitet wird.

12. Verfahren nach Anspruch 11,
**dadurch gekennzeichnet,**
**dass** der Zielpunkt vom Community-Server (05) unter Berücksichtigung des aktuellen Standortes des Benutzerendgeräts (06) und/oder unter Berücksichtigung des aktuellen Standortes mindestens eines Navigationsgeräts (07) abgeleitet wird.

13. Verfahren nach Anspruch 11 oder 12,
**dadurch gekennzeichnet,**
**dass** der Zielpunkt unter einer bestimmten Adressierung im Nachrichtenserver (05) gespeichert ist, wobei die Nachricht des Benutzerendgeräts (06) an das Navigationsgerät (07) die Adressierung des Zielpunkts im Nachrichtenserver (05) enthält.
